# EUROPEAN PATENT SPECIFICATION

(11) **EP 4 163 686 B1**
(45) Date of publication and mention of the grant of the patent: **07.10.2026**
(21) Application number: 22202816.9
(22) Date of filing: 16.08.2019
(51) Int. Cl.: G02B 6/25, G02B 6/255

(54) **OPTICAL FIBER MASS SPLICE METHODS AND ASSEMBLIES**
FASEROPTISCHE MASSENSPLEISSVERFAHREN UND ANORDNUNGEN
PROCÉDÉS ET ENSEMBLES D'ÉPISSURE DE MASSE DE FIBRE OPTIQUE

(30) Priority: 23.08.2018 US 201862721896 P
(43) Date of publication of application: 12.04.2023
(62) Document number(s) of the earlier application(s) in accordance with Art. 76 EPC: 19762028.9 / 3 841 413
(73) Proprietor: AFL Telecommunications LLC, Duncan, SC 29334 (US)
(72) Inventor: LICHOULAS, Ted, Duncan 29334 (US); DONALDSON, Chris, Duncan 29334 (US); BRANKS, Bobby, Duncan 29334 (US)
(74) Representative: Serjeants LLP

(56) References cited:
- EP-A1- 2 700 989
- JP-A- S62 254 108
- US-A- 5 813 902

## Description

### FIELD

The present disclosure relates generally to improved methods and assemblies which facilitate mass splicing of optical fibers.

### BACKGROUND

Spliced fiber optic assemblies having spliced on connectors are widely utilized in a variety of fiber optic applications. There are generally two categories of spliced-on connector solutions on the market: single fiber connector to single fiber splice-on connectors using individual fiber splices; and multi-fiber connector to multifiber splice-on connectors using a mass fusion splice.

However, various new fiber optic applications require new splice-on connector solutions. For example, emerging applications such as in the medical and harsh environment market spaces requiring that individual connectors or terminii are spliced onto multi-fiber groups, such as groups of loose tube fibers or fiber optic ribbons. For example, in many cases, it is preferable to splice individual connectors or terminii to a multi-fiber ribbon or cable and protect this splice point with a mass fusion splice protector.

### Application drivers include:

(1) Medical market - In catheters, a precision cleave, ball lens, endcap, or sensor is attached to one end of a fiber. This fiber is fixed to a probe end at one end of the catheter. The opposite end of this fiber is threaded back through the catheter. This fiber must then be terminated so the catheter can interface with medical instrumentation. Medical companies are being forced to develop internal connectorization capabilities or individual fiber splicing capabilities that increase manufacturing complexity and cost.
(2) Harsh environment connector market - It is common to use multiple individual terminii in connector housings to create a multi-pin multi-fiber connector housing. Significant manufacturing skill is required to make these connectors by directly terminating fibers, resulting in increased cost and complexity.

Accordingly, improved methods and apparatus for mass splice applications are desired in the art. In particular, mass splice methods and assemblies which facilitate mass splicing and which address various of the above-stated issues, such as by reducing cost and/or complexity, would be advantageous.

JP S62 254108 discloses a fiber setting fixture for optical fiber mass splicing according to the preamble of claim 1.

### BRIEF DESCRIPTION

Aspects and advantages of the invention will be set forth in part in the following description, or may be obvious from the description, or may be learned through practice of the invention.

The invention provides a fiber setting fixture for optical fiber mass splicing according to claim 1.

The invention further provides an optical fiber mass splice method according to claim 11.

Optional or non-essential features are set out in the dependent claims.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF FIGURES

A full and enabling disclosure of the present invention, including the best mode thereof, directed to one of ordinary skill in the art, is set forth in the specification, which makes reference to the appended figures, in which:
FIG. 1 is a perspective view of a fiber clamp with a fiber optic ribbon loaded therein;
FIG. 2 is a perspective view of a fiber clamp with a plurality of loose optical fibers loaded;
FIG. 3 is a perspective view of a fiber clamp which includes a connector holder and has a plurality of loose optical fibers loaded therein;
FIG. 4 is a perspective view of a fiber clamp which includes a connector holder and has a fiber optic ribbon loaded therein;
FIG. 5 is a perspective view of a fiber clamp which includes a connector holder and has a plurality of loose optical fibers loaded therein;
FIG. 6 is a perspective view of a fiber setting fixture with a fiber clamp secured thereon in accordance with embodiments of the present disclosure;
FIG. 7 is a perspective view of a fiber setting fixture with a fiber clamp secured thereon in accordance with other embodiments of the present disclosure;
FIG. 8 is a perspective view of a portion of a fiber setting fixture, without a fiber clamp secured thereon, in accordance with embodiments of the present disclosure;
FIG. 9 is a perspective view of a portion of a fiber setting fixture, with a fiber clamp secured thereon and optical fibers inserted into the fiber setting fixture and loaded into the fiber clamp, in accordance with embodiments of the present disclosure;
FIG. 10 is a perspective view of a portion of a fiber setting fixture, with a cover removed, in accordance with embodiments of the present disclosure;
FIG. 11 is a top view of a splicer with loaded fiber clamps positioned thereon;
FIG. 12 is a spliced fiber optic assembly ; and
FIG. 13 is a flow chart illustrating a method in accordance with embodiments of the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

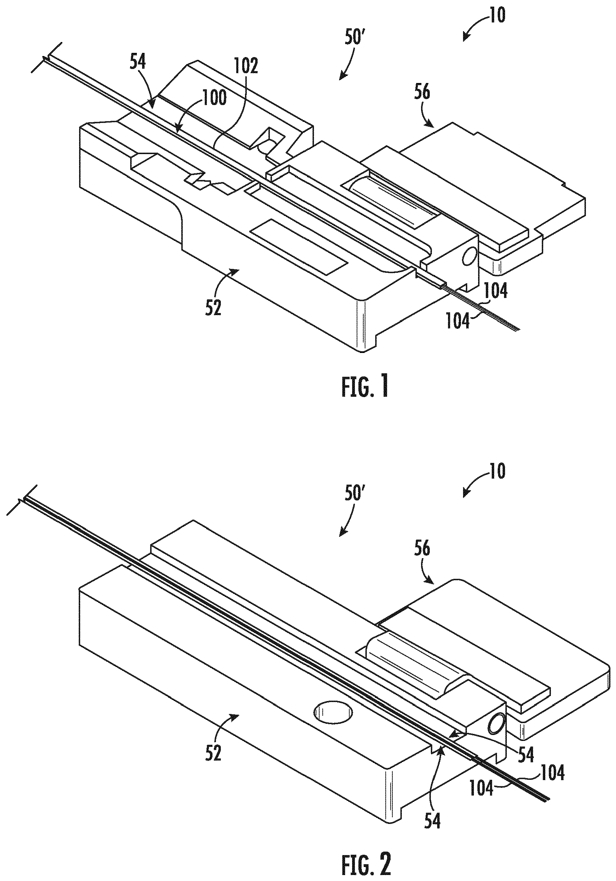

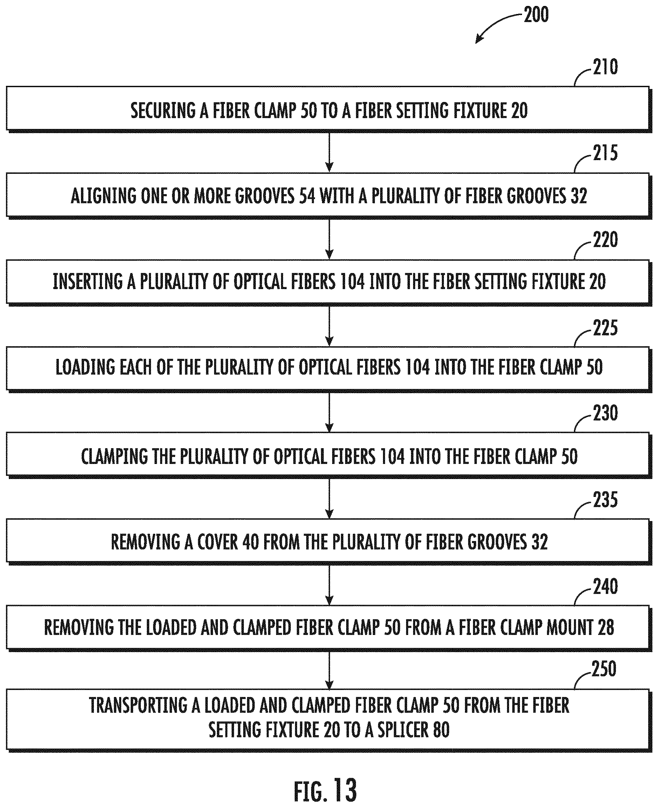

Referring now to FIGS. 1 through 13, optical fiber mass splice assemblies 10 and components thereof are provided. Such assemblies 10 may be utilized in optical fiber mass splice methods. Assemblies 10 and methods as described advantageously provide improve mass splicing of optical fibers which may be particularly useful in fields such as, for example, the medical field and harsh environment field. In particular, assemblies 10 and methods as described advantageously reduce the time, cost, and complexity associate with mass splicing efforts.

Referring now to FIGS. 1 through 5, various fiber clamps 50 are illustrated. One or more fiber clamps 50, such as first and second fiber clamps 50', 50", may be components of an optical fiber mass splice assembly 10.

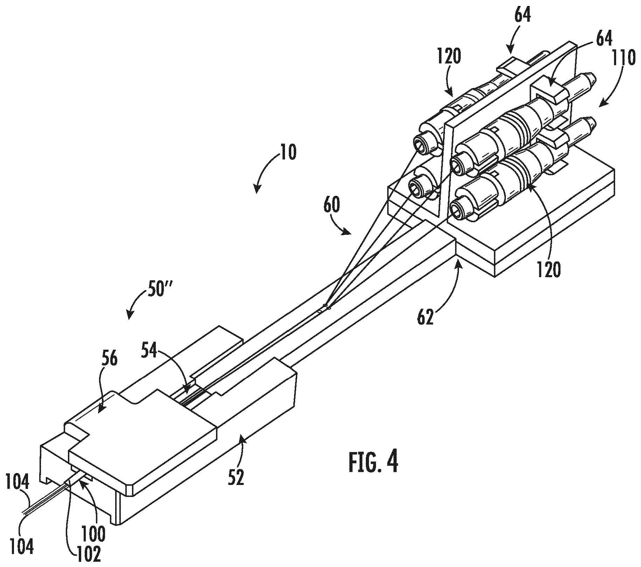

A fiber clamp 50 may include a clamp body 52 in which one or more grooves 54 are defined. As illustrated in FIG. 1 and 4, a single groove 54 may be defined which can accommodate an optical fiber ribbon 100. The optical fiber ribbon may be a standard optical fiber ribbon 100 having a ribbon coating 102 which surrounds a plurality of optical fibers 104, or may be an intermittently bonded optical fiber ribbon having a plurality of loose optical fibers 104 with intermittent bonds between various adjacent optical fibers 104 throughout the lengths thereof. As illustrated in FIGS. 2, 3, and 5, a plurality of grooves 54, which may be aligned in parallel, may be defined. Each groove 54 may accommodate a single loose optical fiber 104. Such clamps 50 may thus accommodate a plurality of loose optical fibers 104.

When a plurality of grooves 54 are utilized, grooves 54 may advantageously have a groove pitch and width which corresponds to the groove pitch of the splicer 80 in which the splicing operations may be performed as discussed herein. For example, the groove pitch may be nominal 250 micron or 200 micron. The groove width may be nominal 250 micron, 200 micron, 150 micron, or 100 micron. Further, other suitable widths and pitches may be utilized as desired. The groove 54 width is less than the groove 54 pitch. Such grooves 54 are particularly advantageous for maintaining spacing during splicing.

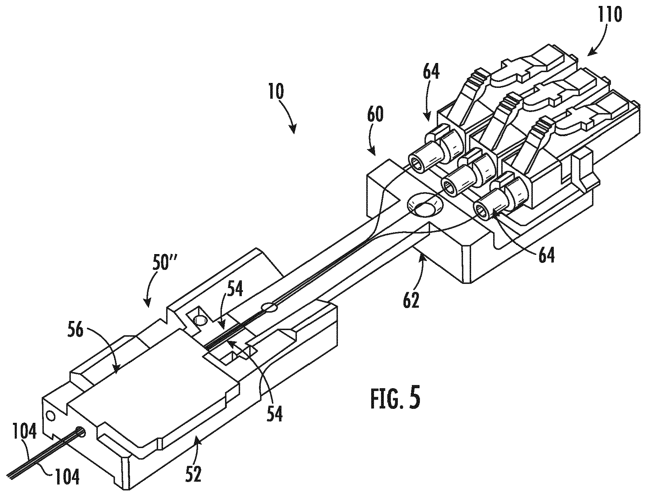

A fiber clamp 50 may further include a cover 56 which may be movably connected to the clamp body 52. For example, as illustrated in FIGS. 1 through 5, the cover 56 may be rotatably connected to the clamp body 52. The cover 56 may be movable between an open position, as shown in FIGS. 1 through 3, which allows loading and/or unloading of ribbons 100 or loose optical fibers 104 into the grooves 54, and a closed position, as shown in FIGS. 4 and 5, which clamps the ribbons 100 or loose optical fibers 104 within the fiber clamp 50.

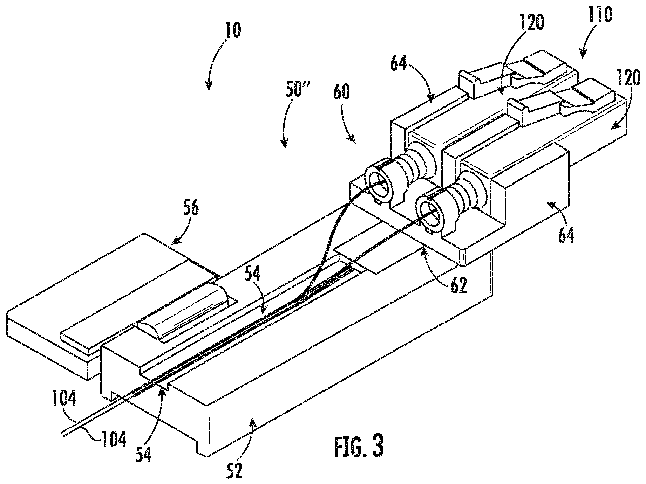

A fiber clamp 50 is configured to accommodate a free plurality of optical fibers (whether in ribbon form or loose) which may, for example, be spliced to an optical fiber pigtail 110, which may for example be a pre-terminated optical fiber pigtail. Such first fiber clamps 50' are illustrated in FIGS. 1 and 2. A fiber clamp 50 is configured to accommodate an optical fiber pigtail 110. Such second fiber clamps 50" are illustrated in FIGS. 3 through 5.

A fiber clamp 50, such as a second fiber clamp 50", may include additional components to support connectors 120 of the pigtails 110 being clamped in the fiber clamps 50. Such support advantageously facilitates control of the position of the connectors 120 and length of the pigtails 110. Accordingly, a precise distance can be maintained between the splice location and the connectors 120. This is critical in, for example, medical (e.g. catheters, etc.) and connector housing applications. The fiber clamp 50 includes a connector holder 60 which is removably connected to the clamp body 52. Connector holder 60 may, for example, include an arm 62 and a plurality of connector clips 64. The arm 62 may be connected to the clamp body 52, and may extend from the clamp body 52. The arm 62 may be cantilevered from the clamp body 52. The connector clips 64 may be mounted to the arm 62, such as removably mounted to the arm 62. Where the arm 62 is cantilevered from the clamp body 52, the connector clips 64 may be mounted at a free end of the arm 62 opposite a connected end of the arm 62. Each connector clip 64 may hold a connector 120 which is inserted therein and which is connected to an optical fiber 104, such as an optical fiber 104 loaded and/or clamped into the second fiber clamp 50''.

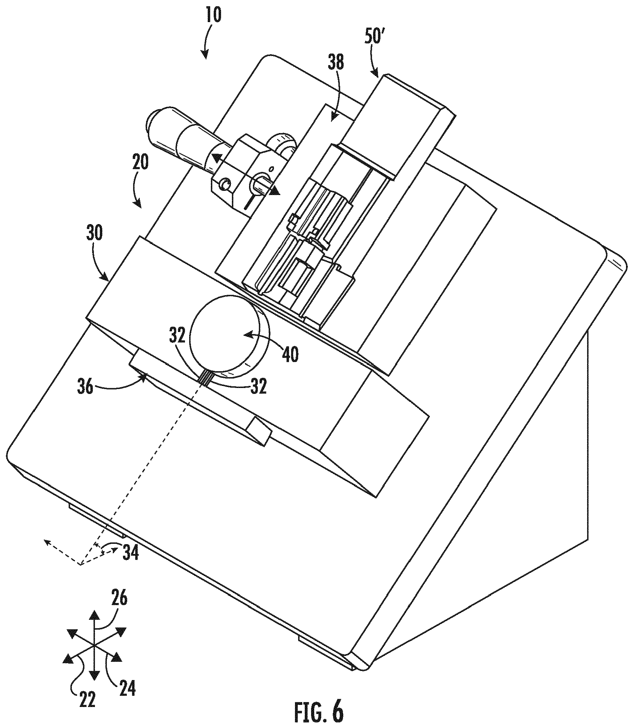

Referring now to FIGS. 6 through 10, optical fiber mass splice assemblies 10 may include a fiber setting fixture 20. The fiber setting fixture 20 may advantageously facilitate improved loading of optical fiber ribbons 100 and/or loose optical fibers 104 into fiber clamps 50. An orthogonal coordinate system may be defined for the fiber setting fixture 20. The coordinate system may include, for example, a longitudinal axis 22, a lateral axis 24, and a transverse axis 26, each of which may be mutually orthogonal to the other axes.

A fixture 20 includes a fiber alignment block 30. A plurality of fiber grooves 32, which may for example be aligned in parallel, are defined in the fiber alignment block 30. Each fiber groove 32 may accommodate a portion of an optical fiber 104, such as a portion of an optical fiber 104 from a ribbon 100 (which has, for example, been stripped and/or otherwise processed as necessary) or a portion of a loose optical fiber 100 (which has, for example, been stripped and/or otherwise processed as necessary). The optical fibers 104 may be inserted into the fiber setting fixture 30, such as into the fiber grooves 32 of the fiber alignment block 30, to facilitate proper alignment of the optical fibers 104 and simple, efficient loading of the optical fibers 104 into fiber clamps 50, such as for splicing purposes.

Fiber grooves 32 may advantageously have a groove pitch and width which corresponds to the groove pitch of the splicer 80 in which the splicing operations may be performed as discussed herein. For example, the groove pitch may be nominal 250 micron or 200 micron. The groove width may be nominal 250 micron, 200 micron, 150 micron, or 100 micron. Further, other suitable widths and pitches may be utilized as desired. The groove 32 width is less than the groove 32 pitch. Such grooves 32 are particularly advantageous for maintaining spacing during splicing.

The fiber grooves 32 may be oriented and extend (such as lengthwise) at an angle 34 to a plane defined by the longitudinal axis 22 and the lateral axis 24. The angle 34 may, for example, be in the range between 15 degrees and 75 degrees, such as between 25 degrees and 65 degrees, such as between 35 degrees and 55 degrees, such as between 40 degrees and 50 degrees. The angle of the fiber grooves 32 may advantageously facilitate proper loading of the optical fibers 104 therein.

Fiber setting fixture 20 may further include a backstop 36 which may, for example, be disposed proximate the block 30 and fiber grooves 32. For example, backstop 36 may be positioned at a distal end of the fiber grooves 32. When an optical fiber 104 is inserted into a fiber groove 32, the optical fiber 104 may traverse through the length of the fiber groove 32 until the optical fiber 104 reaches the distal end of the fiber groove 32 and encounters the backstop 36. At this point, the optical fiber 104 may abut against the backstop 36, such that further lengthwise traversal of the optical fiber 104 is prevented. Accordingly, each optical fiber 104 of a plurality of optical fibers 104 inserted into the fiber grooves 32 is inserted to a uniform length/distance, thus ensuring precise and accurate alignment and loading into a clamp 50, such as for splicing purposes.

The fiber setting fixture 20 further includes a fiber clamp mount 38. Each fiber clamp 50, which may for example be a component of an assembly 10, is removably securable to the fiber clamp mount 38 to facilitate loading of optical fibers 104 therein. The fiber clamp mount 38 is movable relative to the fiber alignment block 30 along at least one axis. Such movement may facilitate alignment of the one or more grooves 54 with the plurality of fiber grooves 32. Accordingly, after such alignment, optical fibers 104 may, for example, be first inserted into the fiber grooves 32 and then loaded into the one or more grooves 54. Accordingly, efficient, precise, and accurate loading into a clamp 50 is facilitated.

Mount 38 may be movable along the lateral axis 24. Additionally or alternatively, mount 38 may be movable along the longitudinal axis 22 and/or the transverse axis 24.

The fiber setting fixture 20 may further include a cover 40. Cover 40 may removably enclose at least a portion of the plurality of fiber grooves 32, such that optical fibers 104 being inserted into the fiber grooves 32 are inserted between the cover 40 and the block 30. Cover 40 may, for example, be removably connectable to the block 30 or movably connected to the block 30. When the optical fibers 104 are being inserted into the fiber grooves 32, the cover 40 may be disposed on the fiber alignment block 30 such that the fiber grooves 32 are at least partially enclosed. After the optical fibers 104 are secured in a clamp 50, the cover 40 may then be removable from the fiber grooves 32, such as via removal from the fiber alignment block 30 or movement from a closed position to an open position, to allow simple and efficient removal of the optical fibers 104 from the fiber grooves 32.

The cover 40 may be a magnet. Alternatively, the cover 40 may be a hinged block or other suitable apparatus for selectively enclosing at least portions of the fiber grooves 32.

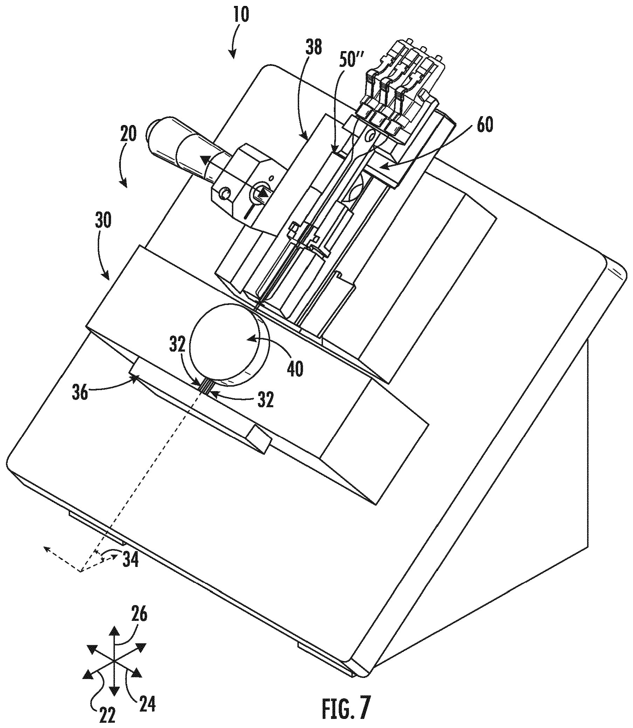

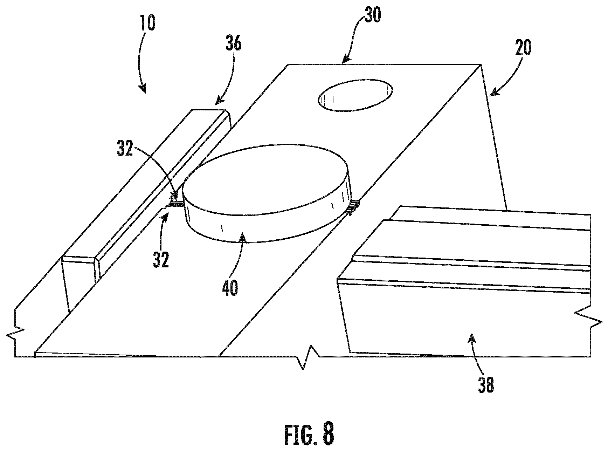

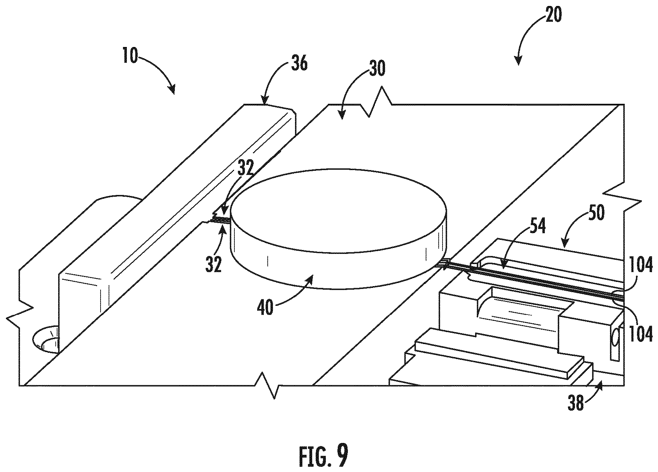

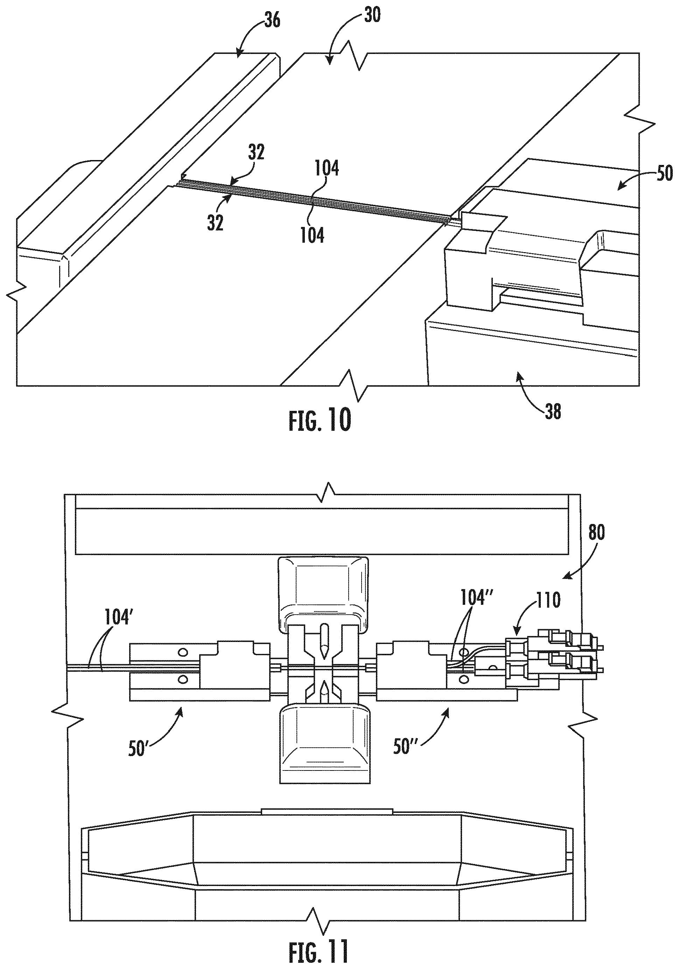

As discussed, and referring again to FIGS. 1 through 13, the present disclosure is further directed to optical fiber mass splice methods. A method 200 in accordance with the present disclosure includes the step 210 of securing a fiber clamp 50, such as a first fiber clamp 50' as illustrated in FIG. 6 or a second fiber clamp 50'' as illustrated in FIG. 7, to a fiber setting fixture 20. For example, the fiber clamp 50 may be secured to a fiber clamp mount 38. FIG. 8 illustrates a fixture 20 prior to, for example, securing of a fiber clamp 50 to a mount 38 of the fixture 20. FIGS. 9 and 10 illustrate a fiber clamp 50 mounted to a mount 38 of the fixture 20.

A method 200 may further include the step 215 of aligning the one or more grooves 54 of the fiber clamp 50 with the plurality of fiber grooves 32 of the fiber setting fixture 20. Such alignment is illustrated, for example, by arrows in FIGS. 6 and 7.

A method 200 further includes the step 220 of inserting a plurality of optical fibers 104 (whether in loose form or ribbon form, as discussed herein) into the fiber setting fixture 20 such that each of the plurality of optical fibers 104 is disposed in one of the plurality of fiber grooves 32 and contacts the backstop 36. Such insertion is illustrated, for example, in FIG. 9. The plurality of fiber grooves 32 each extend along a lengthwise direction (and may advantageously be parallel), and the plurality of optical fibers 104 are inserted along the lengthwise direction until each of the plurality of optical fibers 104 contacts the backstop 36.

A method 200 further includes the step 225 of loading each of the plurality of optical fibers 104 into the fiber clamp 50. Such loading step 225 will occur after the inserting step 220. The clamp 50 may, for example, be in an open position for such loading. Loading may include, for example, inserting the optical fibers 104 (such as of a ribbon 100, or loose optical fibers 104) into the one or more grooves 54. FIG. 9 illustrates optical fibers 104 loaded into an open fiber clamp 50.

A method 200 further includes the step 230 of clamping the plurality of optical fibers 104 into the fiber clamp 50. Such clamping step 230 occurs after the loading step 225. Such clamping may include moving the clamp 50 from an open position to a closed position. When clamped, the optical fibers 104 may be secured in position in the grooves 54. FIG. 10 illustrates optical fibers 104 clamped into a fiber clamp 50.

A method 200 may further include the step 235 of removing the cover 40 from the plurality of fiber grooves 32. Such removing step 235 may, for example, occur after the clamping step 230. FIG. 10 illustrates an assembly 10 with the cover 40 removed from the fiber grooves 32.

After the plurality of optical fibers 104 are secured in a clamp 50, the clamp 50 may be removed from the fixture 20 for splicing and/or other processing. For example, a method 200 may include the step 240 of removing the loaded and clamped fiber clamp 50 from the fiber clamp mount 28.

After the removal step 240, various steps as discussed herein may be repeated using another plurality of optical fibers 104 and another clamp 50. For example, one or more of steps 210 through 240 may be repeated. Such steps may be performed for a first plurality of optical fibers 104' and with a first fiber clamp 50', and such steps may also be performed for a second plurality of optical fibers 104" and with a second fiber clamp 50". The first plurality of optical fibers 104' may be a free plurality of optical fibers, and the second plurality of optical fibers 104" may be an optical fiber pigtail 110.

Method 200 may further include the step of cleaving the optical fibers 104, such as the first plurality of optical fibers 104' and second plurality of optical fibers 104". Such a step may occur after removal step 240.

Method 200 may further include the step 250 of transporting a loaded and clamped fiber clamp 50 from the fiber setting fixture 20 to a splicer 80. Such step may, for example, occur for a loaded and clamped first fiber clamp 50' and for a loaded and clamped second fiber clamp 50''. Such step may, for example, occur after cleaving of the optical fibers 104 as discussed above. A transported, loaded, and clamped first and second fiber clamp 50', 50" in a splicer 80 is shown in FIG. 11.

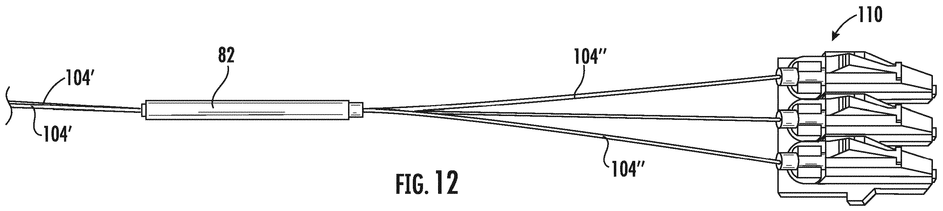

Once transported, the optical fibers 104 clamped in the fiber clamps 50 may, for example, be spliced together and/or otherwise processed. For example, first optical fibers 104' and second optical fibers 104" may be spliced together in the splicer 80. Further, after splicing, a splice protector sleeve 82 (which may, for example, be preloaded on the first optical fibers 104' or second optical fibers 104'') may be provided on the splice which results from splicing of the first optical fibers 104' and second optical fibers 104" together. The splice protector sleeve 82 for example be formed from a heat shrink material. The splice protector sleeve 82 may be heated onto the spliced together first optical fiber 104' and second optical fiber 104'' to protect the splice. FIG. 12 illustrates a spliced fiber optic assembly which includes spliced together first optical fibers 104' and second optical fibers 104" and further includes a splice protector sleeve 82 heated thereon.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims.

## Claims

1. A fiber setting fixture (20) for optical fiber mass splicing, comprising:
a fiber alignment block (30), wherein a plurality of fiber grooves (32) is defined in the fiber alignment block (30);
a fiber clamp mount (38) movable relative to the fiber alignment block (30) along at least one axis; and
a fiber clamp (50) removably securable to the fiber clamp mount (38), the fiber clamp (50) comprising a clamp body (52) and at least one groove (54) defined in the clamp body (52), **characterized in that** the fiber clamp (50) comprises a connector holder (60) removably connected to the clamp body (52).

2. The fiber setting fixture (20) of claim 1, wherein a longitudinal axis, lateral axis, and transverse axis are defined by the fiber setting fixture (20), and wherein the plurality of fiber grooves (32) extend at an angle to a plane defined by the longitudinal axis and lateral axis.

3. The fiber setting fixture (20) of claim 2, wherein the angle is between about 15 degrees and about 75 degrees.

4. The fiber setting fixture (20) of claim 1, wherein each fiber groove (32) is configured to accommodate a portion of an optical fiber (104).

5. The fiber setting fixture (20) of claim 1, comprising a cover (56) removably enclosing at least a portion of the plurality of fiber grooves (32).

6. The fiber setting fixture (20) of clam 5, wherein the cover (56) is a magnet.

7. The fiber setting fixture (20) of claim 1, wherein the connector holder (60) comprises an arm (62) extending from the clamp body (52) and a plurality of connector clips (64) mounted to the arm (62).

8. The fiber setting fixture (20) of claim 1, wherein the plurality of connector clips (64) are removably mounted to the arm (62).

9. The fiber setting fixture (20) of claim 1, wherein the arm (62) is cantilevered from the clamp body (52) and the plurality of connector clips (64) are mounted at a free end of the arm (62).

10. The fiber setting fixture (20) of claim 1, wherein the plurality of connector clips (64) is configured to receive a respective connector at each connector clip.

11. An optical fiber mass splice method, comprising:
securing a fiber clamp (50) to a fiber setting fixture (20), the fiber clamp (50) comprising a connector holder (60) removably connected to a clamp body (52) of the fiber clamp (50), the fiber setting fixture (20) comprising a fiber alignment block (30) and a backstop (36), wherein a plurality of fiber grooves (32) is defined in the fiber alignment block (30), and wherein the plurality of fiber grooves (32) of the fiber setting fixture (30) each extend along a lengthwise direction;
inserting a plurality of optical fibers (104) into the fiber setting fixture (20) such that each of the plurality of optical fibers (104) is disposed in one of the plurality of fiber grooves (32) and contacts the backstop (26), wherein the plurality of optical fibers (104) is inserted along the lengthwise direction until each of the plurality of optical fibers contacts the backstop (36);
loading, after the inserting step, each of the plurality of optical fibers (104) into the fiber clamp (50); and
clamping the plurality of optical fibers (104) in the fiber clamp (50).

12. The method of claim 11, wherein the fiber clamp (50) comprises at least one groove (54), and further comprising aligning the at least one groove (54) of the fiber clamp (50) with the plurality of fiber grooves (32) of the alignment block (30).

13. The method of claim 11, wherein clamping the plurality of optical fibers (104) in the fiber clamp (50) comprises moving the fiber clamp (50) from an open position to a closed position to secure the plurality of optical fibers (104) in the plurality of fiber grooves.

## Patentansprüche

1. Faserfixierbefestigung (20) zum Massenspleißen optischer Fasern, umfassend:
einen Faserausrichtungsblock (30), wobei eine Vielzahl von Faserkerben (32) in dem Faserausrichtungsblock (30) definiert ist;
eine Faserklemmenmontage (38), die relativ zu dem Faserausrichtungsblock (30) entlang zumindest einer Achse bewegbar ist; und
eine Faserklemme (50), die entfernbar an der Faserklemmenmontage (38) befestigbar ist, wobei die Faserklemme (50) einen Klemmenkörper (52) und zumindest eine Kerbe (54), die in dem Klemmenkörper (52) definiert ist, umfasst, **dadurch gekennzeichnet, dass** die Faserklemme (50) eine Verbinderhalterung (60) umfasst, die entfernbar mit dem Klemmenkörper (52) verbunden ist.

2. Faserfixierbefestigung (20) nach Anspruch 1, wobei eine Längsachse, eine Seitenachse und eine Querachse von der Faserfixierbefestigung (20) definiert sind, und wobei die Vielzahl von Faserkerben (32) sich bei einem Winkel zu einer Ebene erstreckt, die von der Längsachse und Seitenachse definiert ist.

3. Faserfixierbefestigung (20) nach Anspruch 2, wobei der Winkel zwischen etwa 15 Grad und etwa 75 Grad liegt.

4. Faserfixierbefestigung (20) nach Anspruch 1, wobei jede Faserkerb (32) derart ausgebildet ist, einen Abschnitt einer optischen Faser (104) aufzunehmen.

5. Faserfixierbefestigung (20) nach Anspruch 1, umfassend eine Abdeckung (56), die zumindest einen Abschnitt der Vielzahl von Faserkerben (32) entfernbar umschließt.

6. Faserfixierbefestigung (20) nach Anspruch 5, wobei die Abdeckung (56) ein Magnet ist.

7. Faserfixierbefestigung (20) nach Anspruch 1, wobei die Verbinderhalterung (60) einen Arm (62), der sich von dem Klemmenkörper (52) erstreckt, und eine Vielzahl von Verbinderklammern (64), die an dem Arm (62) montiert ist, umfasst.

8. Faserfixierbefestigung (20) nach Anspruch 1, wobei die Vielzahl von Verbinderklammern (64) entfernbar an dem Arm (62) montiert ist.

9. Faserfixierbefestigung (20) nach Anspruch 1, wobei der Arm (62) von dem Klemmenkörper (52) ausgekragt ist und die Vielzahl von Verbinderklammern (64) an einem freien Ende des Arms (62) montiert ist.

10. Faserfixierbefestigung (20) nach Anspruch 1, wobei die Vielzahl von Verbinderklammern (64) dazu ausgelegt ist, an jedem Verbinder eine jeweilige Verbinderklammer aufzunehmen.

11. Verfahren zum Massenspleißen optischer Fasern, umfassend:
Befestigen einer Faserklemme (50) an einer Faserfixierbefestigung (20), wobei die Faserklemme (50) eine Verbinderhalterung (60) umfasst, die mit einem Klemmenkörper (52) der Faserklemme (50) entfernbar verbunden ist, wobei die Faserfixierbefestigung (20) einen Faserausrichtungsblock (30) und einen Rückstopp (36) umfasst, wobei in dem Faserausrichtungsblock (30) eine Vielzahl von Faserkerben (32) definiert ist, und wobei die Vielzahl von Faserkerben (32) der Faserfixierbefestigung (30) sich jeweils entlang einer Längsrichtung erstreckt;
Einsetzen einer Vielzahl von optischen Fasern (104) in die Faserfixierbefestigung (20), sodass jede der Vielzahl von optischen Fasern (104) in einer der Vielzahl von Faserkerben (32) angeordnet ist und den Rückstopp (26) kontaktiert, wobei die Vielzahl von optischen Fasern (104) entlang der Längsrichtung eingesetzt wird, bis jede der Vielzahl von optischen Fasern den Rückstopp (36) kontaktiert;
Laden, nach dem Einsetzschritt, jeder der Vielzahl von optischen Fasern (104) in die Faserklemme (50); und
Klemmen der Vielzahl von optischen Fasern (104) in der Faserklemme (50).

12. Verfahren nach Anspruch 11, wobei die Faserklemme (50) zumindest eine Kerbe (54) umfasst, und weiter umfassend das Ausrichten der zumindest einen Kerbe (54) der Faserklemme (50) mit der Vielzahl von Faserkerben (32) des Faserausrichtungsblocks (30).

13. Verfahren nach Anspruch 11, wobei das Klemmen der Vielzahl von optischen Fasern (104) in der Faserklemme (50) das Bewegen der Faserklemme (50) aus einer offenen Stellung in eine geschlossene Stellung zum Sichern der Vielzahl von optischen Fasern (104) in der Vielzahl von Faserkerben umfasst.

## Revendications

1. Dispositif de fixation de fibres (20) pour une épissure en masse de fibres optiques, comprenant :
un bloc d'alignement de fibres (30), dans lequel une pluralité de rainures de fibre (32) est définie dans le bloc d'alignement de fibres (30) ;
un support de pince à fibres (38) mobile par rapport au bloc d'alignement de fibres (30) le long d'au moins un axe ; et
une pince à fibres (50) pouvant être fixée de manière amovible au support de pince à fibres (38), la pince à fibres (50) comprenant un corps de pince (52) et au moins une rainure (54) définie dans le corps de pince (52), **caractérisé en ce que** la pince à fibres (50) comprend un support de connecteur
(60) relié de manière amovible au corps de pince (52).

2. Dispositif de fixation de fibres (20) selon la revendication 1, dans lequel un axe longitudinal, un axe latéral et un axe transversal sont définis par le dispositif de fixation de fibres (20), et dans lequel la pluralité de rainures de fibre (32) s'étendent au niveau d'un angle par rapport à un plan défini par l'axe longitudinal et l'axe latéral.

3. Dispositif de fixation de fibres (20) selon la revendication 2, dans lequel l'angle est compris entre environ 15 degrés et environ 75 degrés.

4. Dispositif de fixation de fibres (20) selon la revendication 1, dans lequel chaque rainure de fibre (32) est configurée pour recevoir une partie d'une fibre optique (104).

5. Dispositif de fixation de fibres (20) selon la revendication 1, comprenant un couvercle (56) renfermant de manière amovible au moins une partie de la pluralité de rainures de fibre (32).

6. Dispositif de fixation de fibres (20) selon la revendication 5, dans lequel le couvercle (56) est un aimant.

7. Dispositif de fixation de fibres (20) selon la revendication 1, dans lequel le support de connecteur (60) comprend un bras (62) s'étendant depuis le corps de pince (52) et une pluralité de pinces de connecteur (64) montées sur le bras (62).

8. Dispositif de fixation de fibres (20) selon la revendication 1, dans lequel la pluralité de pinces de connecteur (64) sont montées de manière amovible sur le bras (62).

9. Dispositif de fixation de fibres (20) selon la revendication 1, dans lequel le bras (62) est en porte-à-faux par rapport au corps de pince (52) et la pluralité de pinces de connecteur (64) sont montées à une extrémité libre du bras (62).

10. Dispositif de fixation de fibres (20) selon la revendication 1, dans lequel la pluralité de pinces de connecteur (64) est configurée pour recevoir un connecteur respectif au niveau de chaque pince de connecteur.

11. Procédé d'épissure en masse de fibres optiques, comprenant :
une fixation d'une pince à fibres (50) à un dispositif de fixation de fibres (20), la pince à fibres (50) comprenant un support de connecteur (60) relié de manière amovible à un corps de pince (52) de la pince à fibres (50), le dispositif de fixation de fibres (20) comprenant un bloc d'alignement de fibres (30) et une butée arrière (36),
dans lequel une pluralité de rainures de fibre (32) est définie dans le bloc d'alignement de fibres (30), et dans lequel la pluralité de rainures de fibre (32) du dispositif de fixation de fibres (30) s'étendent chacune le long d'une direction longitudinale ;
une insertion d'une pluralité de fibres optiques (104) dans le dispositif de fixation de fibres (20) de telle sorte que chacune de la pluralité de fibres optiques (104) est disposée dans l'une de la pluralité de rainures de fibre (32) et vient en contact avec la butée arrière (26), dans lequel la pluralité de fibres optiques (104) est insérée le long de la direction longitudinale jusqu'à ce que chacune de la pluralité de fibres optiques vienne en contact avec la butée arrière (36) ;
un chargement, après l'étape d'insertion, de chacune de la pluralité de fibres optiques (104) dans la pince à fibres (50) ; et
un serrage de la pluralité de fibres optiques (104) dans la pince à fibres (50).

12. Procédé selon la revendication 11, dans lequel la pince à fibres (50) comprend au moins une rainure (54), et comprenant en outre un alignement de l'au moins une rainure (54) de la pince à fibres (50) avec la pluralité de rainures de fibre (32) du bloc d'alignement (30).

13. Procédé selon la revendication 11, dans lequel le serrage de la pluralité de fibres optiques (104) dans la pince à fibres (50) comprend un déplacement de la pince à fibres (50) d'une position ouverte à une position fermée pour fixer la pluralité de fibres optiques (104) dans la pluralité de rainures de fibre.
